# NEUE EUROPÄISCHE PATENTSCHRIFT

(11) **EP 1 224 021 B2**
(45) Veröffentlichungstag und Bekanntmachung des Hinweises auf die Entscheidung über den Einspruch: **02.09.2015**
(45) Hinweis auf die Patenterteilung: 14.10.2009
(21) Anmeldenummer: 01962985.6
(22) Anmeldetag: 30.08.2001
(51) Int. Cl.: B01D 3/10, B01D 5/00, F26B 5/04, F26B 21/14, H01F 27/14

(54) **VORRICHTUNG ZUR AUFBEREITUNG VON TRANSFORMATOREN**
DEVICE FOR PREPARING TRANSFORMERS
DISPOSITIF POUR LE TRAITEMENT DE TRANSFORMATEURS

(30) Priorität: 05.09.2000 DE 10043993
(43) Veröffentlichungstag der Anmeldung: 24.07.2002
(73) Patentinhaber: Wilhelm Hedrich Vakuumanlagen GmbH & Co.KG, 35630 Ehringshausen-Katzenfurt (DE)
(72) Erfinder: STRZALA, Helmut, 35619 Braunfels-Bonbaden (DE)
(74) Vertreter: Müller, Eckhard
(86) Internationale Anmeldenummer: PCT/EP2001/010007
(87) Internationale Veröffentlichungsnummer: WO 2002/020113

(56) Entgegenhaltungen:
- DE-A- 19 826 682
- DE-A1- 3 014 831
- US-A- 4 424 633
- US-A- 4 879 004
- S. D. MEYERS ET AL.: 'Transformer Maintenance', 1981, COPYRIGHT Seiten 496 - 497
- 'Moderne Solventdampftrocknungsprozesse und Anlagen', Seiten 1 - 15
- 'Verfahrenstechnik, Nahrungsmitteltechnik und Haushaltstechnik', Bd. 2, August 1972, DEUTSCHE VERLAGS-ANSTALT GMBH, STUTTGART Seiten 398 - 400

## Beschreibung

Die Erfindung betrifft eine Vorrichtung zum Aufheizen und Trocknen von Teilen nach dem Oberbegriff des Anspruchs 1, 2 sowie ein Verfahren gemäß dem Oberbegriff des Anspruches 13.

Leistungstransformatoren in Umspannstationen der elektrischen Energieversorgung benötigen zur Vermeidung von Ausfällen präventive Aufbereitungen ihrer hygroskopischen Isolierungen. Analoges gilt nach Reparaturen oder bei eingetretenen Störungen, wenn die hygroskopischen Isolierungen der Transformatoren nach dem Öffnen der Geräte Feuchte und Gas aus der Umgebungsluft aufgenommen haben und dadurch die Isoliereigenschaften herabgesetzt werden. Auch abgelagerte Alterungsprodukte beeinflussen die Isolierfähigkeit negativ.

Bei der Wartung bzw. bei kleineren Störungen kann das Aktivteil des Transformators im Gehäuse verbleiben und vor Ort, d.h. in der Umspannstation, für den weiteren Gebrauch wieder aufbereitet werden. Hierfür gibt es bereits einige Verfahren.

Als weit verbreitetes Verfahren wird die Aufbereitung mittels des Isolieröles eingesetzt. Dabei wird das Betriebsöl im Umwälzverfahren aus dem Transformator entnommen, im geschlossenen Kreislauf über eine Vakuumaufbereitungsanlage geführt, dabei entfeuchtet und entgast, und dem Transformator wieder zugeführt. Durch den Kontakt des getrockneten Öles mit der Isolation findet somit ein Feuchtigkeitsentzug aus der Isolation indirekt über die Aufbereitungsanlage statt.

Bei einem weiteren Prozeß, dem sogenannten "Oilspray-Verfahren", wird aus dem Transformator zum großen Teil Öl abgelassen, damit die Isolationen dem Vakuum ausgesetzt werden können. Durch Versprühen von Isolieröl im Transformatoreninneren wird der Transformator erwärmt und die verdampfende Feuchtigkeit von einer angeschlossenen Vakuumpumpe abgesaugt.

Daneben gibt es Kombinationen der vorgenannten Prozesse in Verbindung mit umgewälzter Heißluft oder teilweiser Direktbeheizung der Wicklungen durch Stromdurchgang.

Alle vorgenannten Verfahren haben jedoch den Nachteil, daß der Temperaturbereich für die Trocknung durch die Anwesenheit und die Verwendung des Isolieröles sehr stark eingeschränkt ist. Ebenso ist durch die Imprägnierung die Wasserdampfdiffusion wesentlich beeinträchtigt. Der Aufbereitungsprozeß ist daher äußerst zeitaufwendig. Ein weiterer Nachteil ist, daß die Isolation an strömungsungünstigen Stellen unzureichend aufgeheizt wird und insbesondere in schwer zugänglichen Kanälen nicht von den Ablagerungen gereinigt wird.

Bei größeren Defekten muß deshalb der Transformator aus der Verteilerstation abtransportiert und in einem Reparaturwerk zerlegt, repariert und wie vorstehend beschrieben wieder aufbereitet werden.

Üblicherweise werden heute die Isolationen von Leistungstransformatoren, insbesondere die zum Aktivteil zusammengebauten Wicklungen, bei der Neufertigung im Herstellerwerk mit sogenannten Vapour-Phase-Prozessen gemäß der DE 198 26 682 A1, der DE 196 37 313 A1 oder der DE 44 46 204 C1 getrocknet. Hierbei wird das Aktivteil mit den enthaltenen Isolierteilen in einem großen Vakuumautoklaven mit dem in einem Verdampfer erzeugten Solventdampf aufgeheizt und dabei einer intensiven Reinigung unterzogen.

Aus der US-A-4 879 004 ist ein Verfahren und eine Vorrichtung zum Extrahieren von Öl oder polychloriertem Biphenyl aus einer mit Öl- oder PCB-haltigen dialektischen Flüssigkeit mittels eines leicht flüchtigen Lösungsmittels sowie zur Destillation des anfallenden Öl- oder PCB-Lösungsmittel-Gemisches bekannt, bei dem in einem zuvor evakuierten Autoklaven mit darin befindlichen zu reinigenden Teilen das leicht flüchtige Lösungsmittel in einer Aufheizphase in einem im Autoklaven angeordneten Verdampfer verdampft, der Lösungsmitteldampf an den Teilen kondensiert, diese erwärmt und dabei in die elektrische Isolation eindringt, wobei durch die Kondensationswärme das Lösungsmittel das Öl oder PCB aus der elektrischen Isolation herauslöst. Dabei ist es vorgesehen, dass in der Aufheizphase im Autoklaven mehrere Zwischendruckabsenkungen durchgeführt werden, wobei in einer Destillationsphase das leicht flüchtige Lösungsmittel aus dem Öl- oder PCB-Lösungsmittelgemisch aus dem Autoklaven abdestilliert, die Lösungsmittelzufuhr abgesperrt und das Lösungsmittelgemisch umgewälzt wird. Während jeder Zwischendruckabsenkung erfolgt die Umwälzung des im Autoklaven befindlichen und in einem Kondensationssammelbehälter kondensierten Öl- oder PCB-Lösungsmittelgemisches über eine Kondensatableitung, über eine in diese angeordnete Förderpumpe und über eine Rückleitung über den Verdampfer zurück in den Autoklaven. In dem Autoklaven ist ein beheizbarer Verdampfer angeordnet.

Aus der US-A-4 424 633 A ist ebenfalls eine Anlage zum Aufheizen und Trocknen von Teilen unter Vakuum durch Dampfkondensation und Abscheiden einer zweiten höher siedenden Flüssigkeit bekannt, die mit der ersten Flüssigkeit eine Lösung bildet. Das Abtrennen der höher siedenden Flüssigkeit erfolgt durch Einsatz eines Dünnschicht-Verdampfers, bestehend aus einem evakuierbaren Kessel, einer Vakuumpumpe, zwei Kondensatoren vor der Vakuumpumpe und einem Fallfilmverdampfer mit darunter angeordnetem Sammelbehälter zum Auffangen der höher siedenden Flüssigkeit. Dabei ist unter dem Fallfilmverdampfer eine Drucksperre vorgesehen, durch die die nicht verdampfenden Teile der Flüssigkeit abfließen. Unter der Drucksperre befindet sich ein Nachverdampfer mit einer Verbindungsleitung zum Kondensator, in dem die Restkonzentration der ersten Flüssigkeit auf die dem Dampfdruck im Kondensator entsprechende Werte erniedrigt wird.

Aus der DE 30 14 831 A ist eine Kondensations-Trocknungsvorrichtung für getränkte Isolationen von Transformatoren bekannt, wobei das Trocknungsgut in einem Autoklaven mittels Kondensationswärme eines flüssigen, leicht flüchtigen Arbeitsmediums, wie bspw. Kerosin, aufgeheizt wird und die Tränkflüssigkeit als höher siedendes Medium anfällt, sich mit dem Arbeitsmedium vermischt, anschließend einem Verdampfer zugeführt und dort aufkonzentriert wird. Dabei ist eine Förderpumpe vorgesehen, welche das leicht flüchtige Arbeitsmedium über einen Vorwärmer dem Verdampfer zuleitet. Mittels Leckluftpumpen wird die in die Trocknungsanlage eingedrungene Luft abgesaugt. Das leicht flüchtige Arbeitsmedium, insbesondere Kerosin, wird mittels der Förderpumpe über den Vorwärmer dem im Autoklaven angeordneten, als Kaskadenverdampfer ausgebildeten Verdampfer zugeführt. Das Kerosin rieselt über die als Heizschlangen ausgebildeten Heizrohre des Verdampfers, wobei das leichtflüchtige Kerosin verdampft.

In "A GUIDE TO TRANSFORMER MAINTENANCE", S.D. Meyers et al., Transformer Maintenance Institute, Ohio, 1988 (ISBN 0-939320-00-2) wird das sogenannte Vapor-Phase-Verfahren zur Trocknung von Transformatoren beschrieben, bei dem die zu trocknenden Teile des Transformators in einem Vakuumtank geordnet werden, welcher auf etwa 35 mm Hg evakuiert wird. Das Fluid, insbesondere Kerosin, das einen wesentlich höheren Siedepunkt als Wasser aufweist, wird auf 100° C und bei etwa 100 mm Hg in den Vakuumtrocknungskessel mit den zu trocknenden Teilen eingeleitet. Das erhitze Solvent verdampft und kondensiert wieder an den kälteren Oberflächen der zu trocknenden Teile des Transformators und dringt in die inneren Bereiche der Zellstoffisolation ein. Die Flüssigkeit gibt dabei ihre Verdampfungswärme an die Teile, an welche sie kondensiert, ab, wodurch ein Temperaturanstieg erzeugt wird. Die latente Wärme der Heizflüssigkeit lässt beim Kondensieren des Dampfes die Temperatur der Teile schnell ansteigen. Der Solventdampf wird dem Vakuumtrocknungskessel entzogen und den Kondensatoren zur Wiederverwendung zugeführt. Der Druck wird bis auf 1 mm Hg reduziert.

Diese Verfahren sind äußerst effektiv, aber für die Aufbereitung von schon im Betrieb befindlichen Transformatoren vor Ort schlechter geeignet, da bei einer transportablen Trocknungseinrichtung die für die dampfförmige Zuführung des Wärmeträgers erforderlichen großen Querschnitte zum Transformator hin nicht realisierbar sind.

Davon ausgehend liegt der Erfindung die Aufgabe zugrunde, die oben erwähnten Nachteile zu vermeiden und Transformatoren, insbesondere vor Ort, aufzubereiten und dabei gleichzeitig einem intensiven Waschprozeß zu unterziehen. Dabei soll bevorzugt auch die Abscheidung des aufgenommenen Öles erfolgen.

Diese Aufgabe wird erfindungsgemäß gelöst von einer Vorrichtung mit den Merkmalen des Anspruchs 1, 2 sowie einem Verfahren mit den Merkmalen des Anspruches 13. Ausführungen der erfindungsgemäßen Vorrichtung sind Gegenstand der Unteransprüche 3-12.

Da mit der Erfindung möglichst viele der in den drei zuerst genannten Literaturstellen angegebenen Vorteile erreicht oder beibehalten werden sollen, wird insoweit auf die dortigen Lehren vollinhaltlich Bezug genommen.

Erfindungsgemäß erhitzt ein Wärmetauscher die Heizflüssigkeit so, daß sie in der flüssigen Phase bleibt. Die Verdampfung erfolgt erst am oder im Vakuum-Trocknungskessel bzw. Gefäß über Expansionsventile, oder über Expansionsventile in einem direkt am Vakuum-Trocknungskessel bzw. am Gefäß angeordneten Expansionsbehälter über die dort stattfindende Druckabsenkung.

Die Vorrichtung kann stationär oder mobil sein, wobei dann als Gefäß der Kessel des aufzuheizenden Transformators verwendet werden kann. Dabei ist es günstig, wenn die Verbindungen zwischen dem die Heizflüssigkeit erwärmenden Wärmetauscher und den Expansionsventilen und/oder zwischen einem Ablaufventil aus dem Kessel und einer Förderpumpe der Anlage und/oder zwischen dem Kessel und ein oder mehreren Absperrventilen trennbar sind. Die Anlage kann dann leicht an ihre jeweiligen Einsatzorte transportiert und dort angeschlossen werden.

Verwendet man einen abnehmbaren Wechselbehälter für die Heizflüssigkeit, so kann man verbrauchte, vom Transformatorenöl in ihren Eigenschaften verschlechterte Heizflüssigkeit direkt entfernen, anderswo aufarbeiten und sehr einfach neue Flüssigkeit dem Transformator zuführen.

Zur Verbesserung des Wirkungsgrades kann der Transformatorkessel durch transportable Isoliermittel, Isolierplatten, Isoliermatten, Wandelemente, ein- oder doppelwandige Tragluftzelte oder durch transportable Zusatzheizungen isoliert oder auch extern gewärmt werden, wobei sich für den mobilen Betrieb Luftheizungen anbieten.

Anstelle von Expansionsventilen, welche die Heizflüssigkeit in den Kessel hinein expandieren und dort verdampfen lassen, kann auch ein Expansionsbehälter mit einer kurzen Leitung zum Kessel hin für das Verdampfen der Heizflüssigkeit verwendet werden. Dieser Expansionsbehälter kann eine Rückleitung für die unverdampfte Heizflüssigkeit aufweisen. Der kritische Weg für die verdampfte Heizflüssigkeit bleibt damit ebenfalls wünschenswert kurz.

Der Expansionsbehälter kann auch auf dem Transformatorkessel angeordnet sein. Wichtig ist wieder eine kurze Leitung zum Transformatorkessel für die verdampfte Heizflüssigkeit. Wenn eine Zuleitung zu einem Kondensator vorgesehen ist, ist nach abgeschlossener Aufheizung eine bessere Ausdestillation des Heizflüssigkeits- bzw. Solventanteils aus dem Gemisch möglich.

Ist der Expansionsbehälter mit einem durchströmbaren Doppelmantel versehen, so kann die erhitzte Heizflüssigkeit vor ihrer Verdampfung diesen zur Deckung der Wärmeverluste durchströmen.

In einer Ausführung der Erfindung kann zusätzlich zur Trennung der aus dem Expansionsbehälter abfließenden, bereits aufkonzentrierten Heizflüssigkeit ein Dünnschicht-Verdampfer vorgesehen sein. Wenn der Dünnschicht-Verdampfer eine Zuleitung zu einem Kondensator aufweist, kann der bei abgesenktem Druck entstehende Dampf diesem direkt zugeführt werden.

Nach einer weiteren Ausgestaltung der Erfindung ist es vorgesehen, dass der aus dem Expansionsbehälter abfließende bereits aufkonzentrierte Anteil durch ein Ventil und eine Drucksperre vermittels Schwerkraft einem nachgeschalteten Dünnschichtverdampfer zur Restabscheidung des Solvents zugeführt und der bei abgesenktem Druck entstehende Dampf durch das Ventil direkt dem Kondensator zugeführt wird. Hierdurch ist eine optimale Abscheidung erreicht.

Nach einer wiederum anderen Ausgestaltung der Erfindung ist es vorgesehen, dass die Drucksperre durch eine Förderpumpe mit einer Ventilschaltung gebildet wird und der Nachverdampfer innerhalb der mobilen Anlage aufgestellt ist. Hierdurch ist erreicht, dass in der Vorbereitungsphase der Verdampfer nicht an dem Transformatorkessel befestigt werden muß, so dass der manuelle Aufwand erheblich reduziert ist.

Sofern der Transformator so niedrig steht, daß für die Aufnahme der aus dem Gefäß abfließenden Heizflüssigkeit kein Platz ist, können eine für geringe Zulaufhöhen konzipierte Förderpumpe, die bevorzugt als Flüssigkeitsringpumpe oder als Verdrängerpumpe ausgeführt ist, und ein höher angeordneter Zwischenbehälter eingesetzt werden mit nachgeschalteter Kreiselringpumpe für die Weiterförderung der Heizflüssigkeit in den Wärmetauscher und/oder Verdampfer. Der Zwischenbehälter ermöglicht damit eine ausreichende Zulaufhöhe für die Kreiselpumpe.

Zur effektiveren Reinigung des Solvents am Ende der Aufheizung und nach abgeschlossener Drucksenkung kann ein Dünnschichtverdampfer mit einer Zuleitung zu einem Kondensator und einer Ableitung zum Wechselbehälter vorgesehen sein.

Weitere Vorteile und Anwendungsmöglichkeiten der vorliegenden Erfindung ergeben sich aus der nachfolgenden Beschreibung der Ausführungsbeispiele anhand der Zeichnungen.

Es zeigen:
- Figur 1: eine Ausführungsform einer erfindungsgemäßen Vorrichtung mit Direktverdampfung im Transformatorkessel,
- Figuren 2 und 3: erfindungsgemäße Ausführungsformen mit Expansionsbehältern,
- Figur 4: ein Ausführungsbeispiel ähnlich den Figuren 2 und 3, jedoch mit zusätzlichem Dünnschichtverdampfer,
- Figur 5: eine erfindungsgemäße Ausführungsform mit einem Zwischenbehälter für die Flüssigkeit und
- Figuren 6: eine weitere Ausführunge mit Dünnschichtverdampfer.

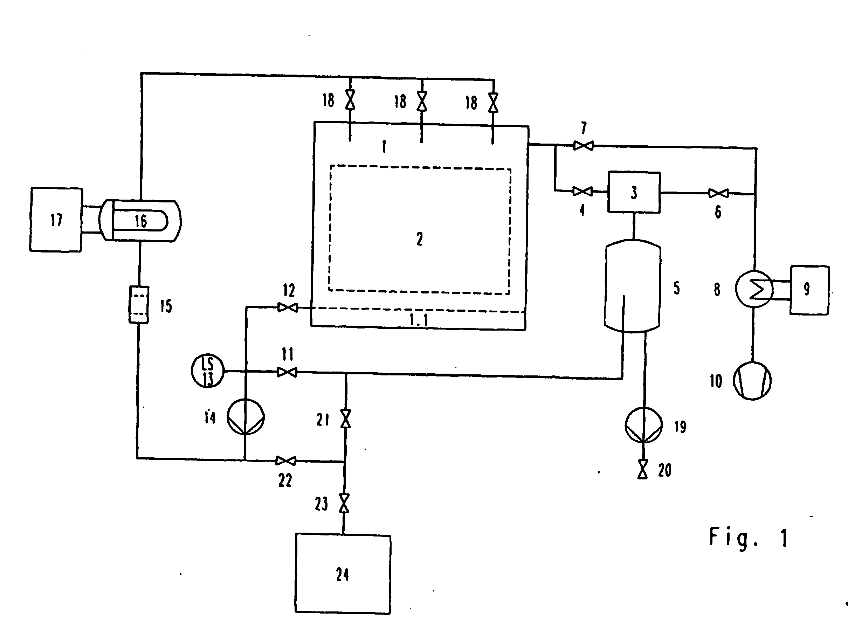

Die Vorrichtung gemäß Figur 1 weist einen Transformatorenkessel 1 auf, in dem sich das oder die zu behandelnden Teile 2, beispielsweise ein Aktivteil 2, befinden. Die Trocknungsanlage gemäß der Fig. 1 ist vorteilhafterweise mit flexiblen Verbindungsleitungen an den Transformatorkessel 1 angeschlossen. Über die Ventile 4, 6 und 7 sind zwei Kondensatoren 3 und 8 angeschlossen. Der Kondensator 8 wird von der Kühleinrichtung 9 gekühlt. Ihm ist eine Vakuumpumpe 10 angeschlossen. An den Kondensator 3 ist der Trennbehälter 5 angeschlossen. Aus dem Sumpf des Kondensators 3 führt eine Leitung mit einer Förderpumpe 19 zu einem Ablaßventil 20. Aus seinem mittleren Bereich führt eine Leitung über ein Ventil 11 zum Niveausensor 13 und zu einer Förderpumpe 14. Die Leitung führt über Ventile 21 und 23 auch zu einem Wechselbehälter 24. Vom Sumpf 1.1 des Kessels 1 führt eine Leitung mit Ventil 12 ebenfalls zur Förderpumpe 14. Eine Stichleitung mit Ventil 22 zweigt zwischen den Ventilen 21 und 23 ab und führt zum Ausgang der Förderpumpe 14. Von dort führt eine Leitung über den Filter 15 zum Wärmetauscher 16 für die Heizflüssigkeit. Der Wärmetauscher 16 wird von der Heizeinrichtung 17 beheizt. Eine Leitung führt erhitzte Heizflüssigkeit zu den am Kessel 1 vorgesehenen Expansionsventilen 18.

In einer mobilen Anlage sind flexible, abnehmbare Verbindungen oder Anschlüsse zwischen Transformatorkessel 1 und Anlage vorgesehen, beispielsweise zwischen den Komponenten 16 und 18, 12 und 14 und zwischen 1 und 7 bzw. 1 und 4.

Die Funktion einer solchen Anlage und die dort möglichen Verfahrensweisen des Heizens, des Druckabsenkens und des Regenerierens der Flüssigkeit sind bereits in der DE 198 26 682 A1, der DE 196 37 313 A1 oder der DE 44 46 204 C1 anhand stationärer Anlagen ausführlich beschrieben.

Als Wärmeträger wird, wie bei den nicht mobilen Vapour-Phase-Anlagen eine Heizflüssigkeit, ein Solvent, zum Beispiel Kerosin, verwendet. Das Solvent wird erfindungsgemäß in flüssiger Form im Wärmetauscher 16 aufgeheizt und über die Expansionsventile 18 in das Transformatoreninnere 1 eingespritzt. Beim Eintritt in das von der Vakuumpumpe 10 evakuierte Transformatoreninnere 1 verdampft ein Teil des flüssigen Solvents und überträgt durch die sich anschließende Kondensation an den kälteren Teilen des Aktivteiles 2 des Transformators die Kondensationswärme an diese kälteren Stellen und heizt diese so auf.

Der nicht verdampfende, als Wärmereservoir fungierende Solvent-Anteil läuft zusammen mit dem Kondensat über die Isolation des Aktivteils 2, trägt somit zur Aufheizung bei und nimmt gleichzeitig an dem Reinigungsprozeß teil. Verunreinigungen werden über die Förderpumpe 14 ausgetragen und im Filter 15 aus dem Kreislauf abgeschieden.

Da es sich bei dem Solvent um ein gutes Lösungsmittel handelt, wird der an und in der Isolation haftende Ölanteil weitestgehend ausgewaschen und im Solvent gelöst. Die Mischung wird über das Ventil 12 der Förderpumpe 14 zugeführt. Durch die Entölung der Isolation und wegen der Abwesenheit von Sauerstoff kann mit den für Vapour-Phase-Prozesse üblichen höheren Temperaturen gefahren werden. Durch den reduzierten Ölanteil wird einerseits eine höhere Arbeitstemperatur möglich und andererseits eine höhere Wasserdampfdiffusion erreicht.

Durch eine geeignete Steuereinrichtung wird der Pumpe 14 zunächst Solvent aus dem Vorratsbehälter 24 über die Ventile 21, 23 und 11 zugeführt. Das im Transformator abfließende Kondensat und der nicht verdampfende Anteil bilden auf dem Boden des Transformators ein zunehmendes Puffervolumen 1.1. Bei ausreichendem Puffervolumen 1.1 wird das Ventil 12 geöffnet und das Ventil 21 geschlossen, so daß ein geschlossener Kreislauf zustande kommt. Auf diese Weise wird das in seinem eigenen Gehäuse 1 befindliche Aktivteil 2 auf die erforderliche Trocknungstemperatur aufgeheizt. Dabei sind die Radtiatorenventeile geschlossen. Das Transformatorengehäuse 1 kann zur Verringerung der Wärmeverluste von außen durch eine geeignete Wärmeisolation geschützt werden.

Die in dem gesamten Trocknungs- und Reinigungsprozeß zur Verfügung zu stellende Solventmenge wird auf die zu erwartende Ölmenge abgestimmt. Für besonders große Transformatoren ist es vorgesehen, bei Bedarf während des Prozesses den Behälter 24 mit dem gebrauchten Solvent (Wärmeträger) gegen einen Behälter mit gereinigtem Solvent auszutauschen. Der Behälter mit dem verunreinigten Solvent wird zur Abscheidung des gelösten Öles zu einer Groß-Vapour-Phase-Anlage gebracht oder an eine Lösungsmittel-Rückgewinnungsanlage angeschlossen. Auf diese Weise kann das Solvent immer wieder verwendet werden. Das gelöste Öl kann jedoch auch in Prozeßpausen in der Anlage selbst wieder abgeschieden werden, wie weiter unten beschrieben wird.

Da die Vorrichtung vorzugsweise für den mobilen Einsatz konzipiert wurde, steht für den Betrieb in der Regel elektrische Energie zur Verfügung. Ein mittels Erdgas oder Heizöl beheizter Wärmetauscher ist jedoch ebenfalls verwendbar. Der zur Steuerung des Prozesses notwendige Kondensator 3 ist vorteilhafterweise luftgekühlt ausgeführt.

Zum Schutz der Vakuumpumpe bzw. des Vakuumpumpsatzes 10 wird der Kondensator 8 mit einer Kälteanlage 9 gekühlt.

Der in dem Prozeß freiwerdende Wasserdampf und die eindringende Leckluft werden über die automatische Reguliereinrichtung 4 in Form eines Ventils mit Hilfe einer geringen Menge Solventdampf in den Kondensator 3 gesaugt. Dort kondensieren Wasserdampf und Solvent und sammeln sich in dem Trennbehälter 5. Das Solvent läuft zurück in den Solvent-Umlauf und nimmt im Wärmetauscher 16 erneut an dem Aufheizprozeß teil. Das abgeschiedene Wasser wird durch die Pumpe 19 aus dem Trennbehälter 5 abgepumpt.

Der weitere Trocknungsprozeß erfolgt in gleicher Weise wie bei den Groß-Vapour-Phase-Anlagen der drei oben genannten Literaturstellen.

Neben dem mobilen Einsatz der vorstehend beschriebenen Vapour-Phase-Anlage kann die Anlage aber auch als preisgünstige Einrichtung in Verbindung mit einem Vakuum-Trocknungskessel als stationäre Einrichtung verwendet werden.

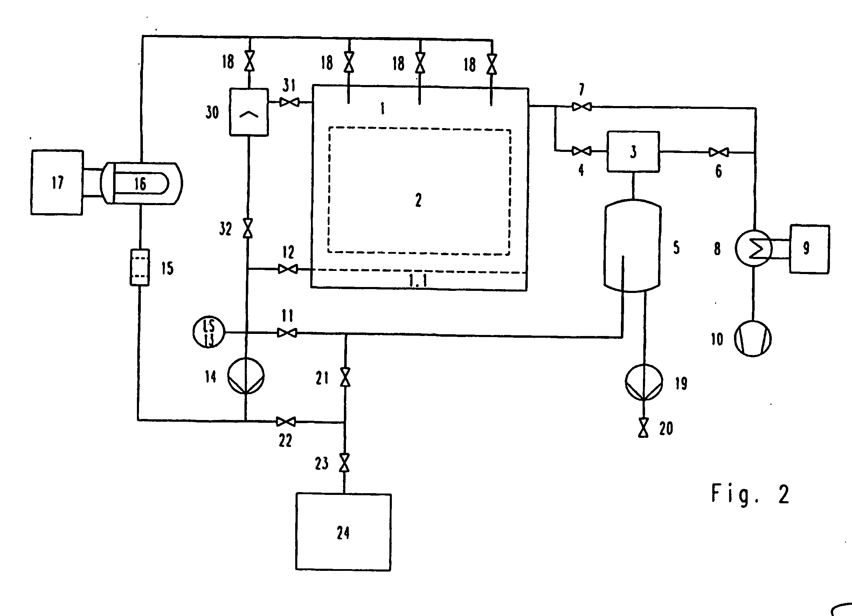

Fig. 2 zeigt eine ähnliche Ausführungsform, die jedoch einen Expansionsbehälter 30 aufweist, der nahe dem Kessel 1 angeordnet und dessen Dampfraum über eine kurze, ein Ventil 31 aufweisende Leitung mit dem Kessel 1 verbunden ist. In den Expansionsbehälter 30 führt eine Leitung mit Expansionsventil 18. Aus dem Sumpf des Expansionsbehälter 30 führt eine Leitung mit Ventil 32 zur Förderpumpe 14.

Die Verdampfung wird bei dieser Ausführungsform also in dem dem Transformator 1 vorgeschalteten Expansionsbehälter 30 mit Expansionsventil 18 durchgeführt. Der Dampf wird durch das Ventil 31 dem Transformator 1 zugeführt. Der nicht verdampfende, als Wärmereservoir fungierende Anteil wird dem Solvent-Kreislauf durch Ventil 32 extern wieder zugeführt. Dies hat den Vorteil, daß nach dem Aufheizprozeß oder in Pausen, z.B. während oder nach einer Zwischendrucksenkung, das aufgenommene Öl wieder abgeschieden werden kann.

Hierzu werden die Expansionsventile 18 am Transformatorkessel 1 geschlossen und das Expansionsventil 18 am Zwischenbehälter 30 sowie die Ventile 31 und 32 geöffnet. Ein Teil des entstehenden Solventdampfs strömt durch das Ventil 31 in den Transformatorkessel 1 ein und gibt dort die Kondensationswärme ab. Der andere, größere Teil gelangt zum Kondensator 3 und kondensiert dort. Das kondensierte reine Solvent, bspw.Kerosin läuft in den Sammelbehälter 5 und wird bei Bedarf in den Behälter 24 entleert.

Auf diese Weise erfolgt eine Aufkonzentration des in Umlauf befindlichen Solvent/Ölgemisches, bis auf eine den Temperatur- und Druckverhältnissen im Transformator 1 und im Kondensator 3 entsprechende Restkonzentration von Solvent in Öl. Das weitestgehend aufkonzentrierte Öl wird in den angeschlossenen Behälter 24 abgepumpt.

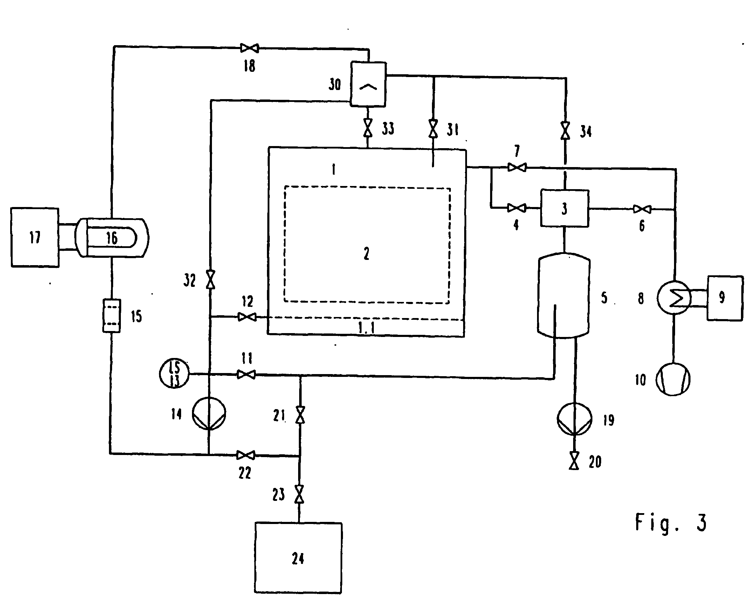

Fig. 3 zeigt eine weitere Ausführung, bei der ein wie in Fig. 2 gezeigter Expansionsbehälter 30 an einer anderen Stelle, nämlich oberhalb des Kessels 1, angeordnet ist. Aus seinem Dampfraum führt eine Leitung mit Ventil 31 in den Kessel 1 und über Ventil 34 zum Kondensator 3. Zusätzlich führt aus dem Sumpf des Kondensators 3 eine Leitung mit Ventil 33 in den Kessel 1.

Um eine noch bessere Ausdestillation des Solventanteils aus dem Gemisch zu erreichen, ist es nach Fig. 3 vorgesehen, daß der Expansionsbehälter 30 auf dem Transformatorenkessel 1 angebracht ist. Dadurch kann dem Transformator 2 schon während der Aufheizung ein Teil des Solvents durch ein Ventil 31 bereits in Dampfform und ein anderer Teil durch ein Ventil 33 unverdampft zugeführt werden, was einer gleichzeitigen, verbesserten Spülung des Transformatoreninneren dient.

Nach abgeschlossener Aufheizung kann der unverdampfte Rücklauf durch ein Ventil 32 dem Solvent-Kreislauf und der im Expansionsbehälter 30 entstehende Dampf durch die Direktverbindung mit dem Ventil 34 dem Kondensator 3 zugeführt werden. Durch den aufgrund der direkten Verbindung zum Kondensator 3 erheblich kleineren Druck im dampfführenden System (Expansionsbehälter 30 und Kondensator 3) ist eine deutlich bessere Aufkonzentration mit geringen Restmengen an gelöstem Solvent möglich.

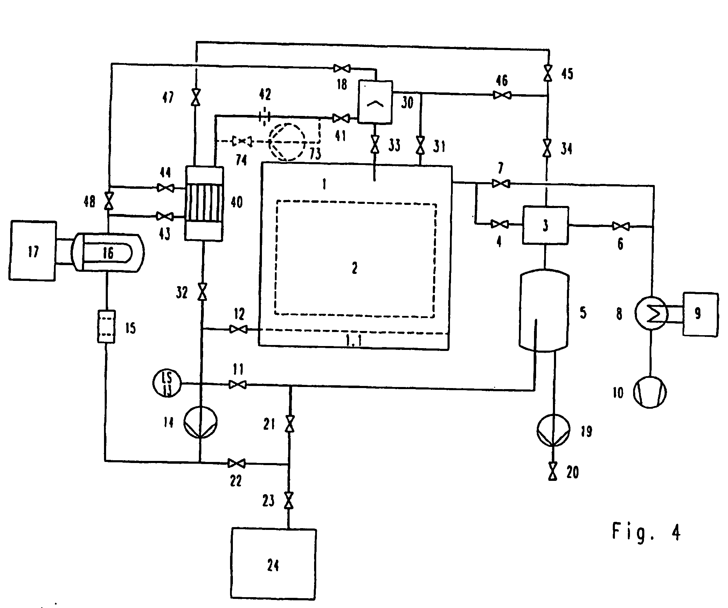

Fig. 4 zeigt eine Ausführung, die der Fig. 3 ähnlich ist. In Fig. 4 ist am Sumpf des Expansionsbehälters 30 über ein Ventil 41 und Drucksperre 42 ein Dünnschichtverdampfer 40 angeschlossen. Dessen Sumpf führt zu einem Ventil 32. Aus seinem Kopf führt eine Leitung mit den Ventilen 47 und 45 zu einem Ventil 34 vor dem Kondensator 3, wobei eine Stichleitung zwischen den Ventilen 34 und 45 mit Ventil 46 zum Dampfraum des Expansionsbehälters 30 oder zum Dampfventil 31 führt. Zur Beheizung des Dünnschichtverdampfers 40 zweigen Leitungen mit Ventilen 43 und 44 vom heißen Teil des Solventkreislaufs ab. Der Durchfluß kann mit einem Ventil 48 gesteuert werden.

Mit der Ausführung gemäß Fig. 4 wird eine weitere Verbesserung der Destillationseigenschaften dadurch erreicht, daß das aus dem Expansionsbehälter 30 abfließende, bereits aufkonzentrierte Gemisch nicht dem Ventil 33, sondern über das Ventil 41 und die Drucksperre 42 dem nachgeschalteten Dünnschichtverdampfer 40 zugeführt wird, der über die Verbindungsleitung durch Ventile 47, 45 und 34 direkt mit dem Kondensator 3 in Verbindung gebracht werden kann. Durch Umwälzung des sowohl im Transformatorensumpf 1.1 als auch des im Vorratsbehälter 24 enthaltenen Solvent/Ölgemisches wird das Solvent bis auf geringstmögliche kleine Restgehalte aus dem Gemisch abgeschieden.

Eine weitergehende Verbesserung kann noch erreicht werden, wenn der Dünnschicht-Verdampfer 40 mit dem im Wärmetauscher 16 aufgeheizten Vorlauf über den Weg mit den Ventilen 43 und 44 beheizt wird.

Anstelle der gravimetrisch wirkenden Drucksperre 42 kann auch eine Förderpumpe 73 mit Ventil 74 verwendet werden. Dadurch kann sowohl die Pumpe 73 als auch der Dünnschichtverdampfer 40 in dem mobilen Anlagenteil angeordnet sein, was eine wesentliche Reduzierung des Aufwandes für die Vorbereitung des Aufbereitungsprozesses ermöglicht.

In vielen Fällen ist es nur mit großem Aufwand oder überhaupt nicht möglich, die Förderpumpe 14 weit genug unterhalb des Transformatoren-Kesselbodens aufzustellen, so daß eine für die einwandfreie Funktion der Pumpe 14 ausreichende geodätische Zulaufhöhe aus dem unter Vakuum stehenden Transformator 1 gewährleistet ist.

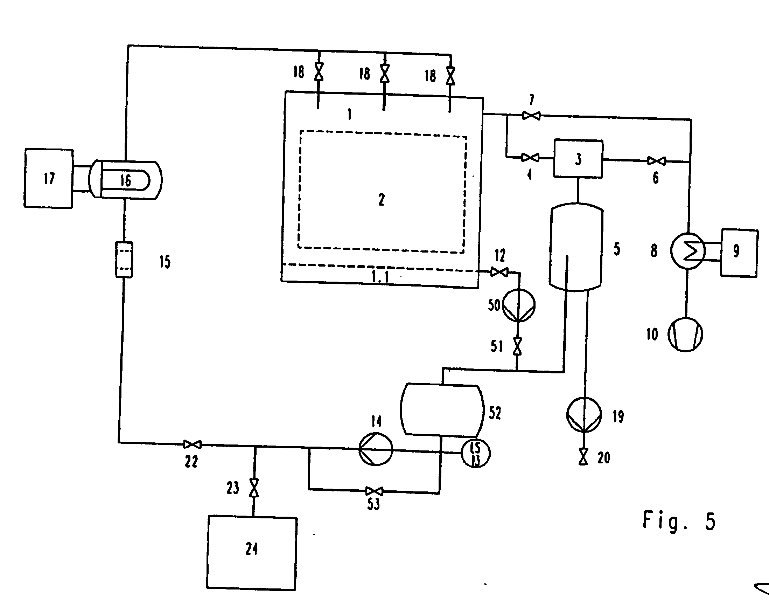

Die Ausführungsform gemäß Fig. 5 ist derjenigen gemäß Fig. 1 gezeigten Ausführung sehr ähnlich, wobei jedoch hinter dem Ablaßventil 12 des Kesselsumpfes 1.1 eine Förderpumpe 50 mit Steuerventil 51 und ein Sammel- oder Zwischenbehälter 52 vorgesehen sind. Vom Sumpf des Sammelbehälters 52 führt eine Leitung zur Förderpumpe 14. Weiterhin ist eine Umwegleitung mit Ventil 53 vorgesehen, die die Förderpumpe 14 umgeht.

Insoweit ist es günstig, wenn das aus dem Transformator 1 durch Ventil 12 ablaufende, ggf. Öl mitführende Solvent mit einer leichten und einfach zu montierenden Fördereinrichtung in einen anlagenseitig höher angeordneten Sammelbehälter 52 gefördert wird. Von dort wird es mit einer für das Verfahren bereits bewährten Kreiselpumpenart über ein Filter 15 und einen Wärmetauscher 16 den Expansionsventilen 18 wieder zugeführt. Für diese Aufgaben sind bekannte Förderpumpen, wie Flüssigkeitsring-Vakuumpumpen, Hubkolbenpumpen oder Membranpumpen, einsetzbar, die sowohl Flüssigkeiten, Gase als auch Dämpfe sowie Mischungen dieser Komponenten problemlos fördern können.

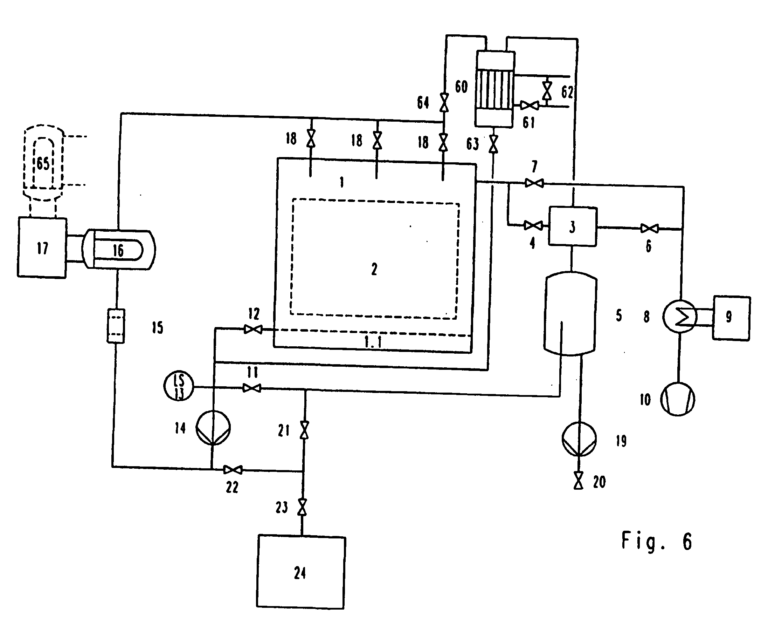

Fig. 6 zeigt eine weitere Ausführung, bei der eine äußerst effektive Variante zur Rückgewinnung des Wärmeträgersolvents gegeben ist. Diese Variante entspricht wieder der derjenigen gemäß Fig. 1, weist aber zusätzlich einen Dünnschichtverdampfer 60 auf. Sein Kopfraum ist über das Ventil 64 mit dem heißen Teil des Solventkreislaufs verbunden. Aus seinem Kopfraum führt eine Leitung direkt zum Kondensator 3 und aus seinem Sumpf eine Leitung mit dem Absperrventil 63 zum Ablauf 12 oder zur Förderpumpe 14. Die Ventile 61 und 62 regeln die Heizleistung des Dünnschichtverdampfers 60; an der Heizeinrichtung 17 kann ein zweiter Wärmetauscher 65 angeordnet sein (gestrichelt gezeichnet).

Bei dieser Ausführung kann das Solvent/Öl-Gemisch nach dem Ende der Aufheizung in dem Kessel 1 und nach dem Ende der abgeschlossenen Zwischendrucksenkung zur Destillation anstelle den Expansionsventilen 18 dem Dünnschicht-Verdampfer 60 zugeführt werden. Dieser Dünnschicht-Verdampfer 60 kann in dem mobilen Teil der Anlage untergebracht sein, so daß keine weiteren flexiblen Verbindungen zwischen Transformator 1 und Anlage erforderlich sind als die in der Grundausführung gemäß Fig. 1 zwischen den Komponenten 16 und 18, 12 und 14 und zwischen 1 und 7 bzw. 1 und 4 bereits gezeigten Anschlüsse.

Die Beheizung erfolgt zweckmäßigerweise durch einen separaten Wärmeträgerkreislauf mit dem Wärmetauscher 65, der von der Heizeinrichtung 17 erwärmt werden kann.
Der im Dünnschicht-Verdampfer 60 entstehende Dampf wird dem Kondensator 3 direkt zugeführt. Das abgeschiedene Öl wird dem Behälter 24 zugefördert. Vorteilhaft ist, daß mit geringem Aufwand für Vorbereitung und Installation exzellente Ergebnisse für die Rückgewinnung des Solvents bzw. für die Abscheidung des Transformatorenöls erzielt werden.

Die anhand der Fig. 1 bis 6 beschriebenen Varianten arbeiten zur Aufheizung des Transformators 1 im wesentlichen ausschließlich mit der Expansionsverdampfung. Lediglich zur Abscheidung des Öls bzw. Rückgewinnung des Solvents werden teilweise direkt verdampfende Einrichtungen verwendet.

### Bezugszeichenliste

- 1: Vakuum-Trocknungskessel bzw. Transformatorenkessel
- 1.1: Puffervolumen, Sumpf des Transformators
- 2: Teile, Transformatoren-Aktivteile, Wicklungen oder Isolierteile
- 3: Kondensator
- 4: Reguliereinrichtung, Ventil
- 5: Trenngefäß für Heizflüssigkeit und Wasser
- 6: Absperrventil
- 7: Absperrventil
- 8: Kondensator
- 9: Kühleinrichtung
- 10: Vakuumpumpe oder Vakuumpumpsatz
- 11: Absperrventil
- 12: Absperrventil
- 13: Niveausensor
- 14: Förderpumpe
- 15: Filter
- 16: Wärmetauscher
- 17: Heizeinrichtung
- 18: Expansionsventil
- 19: Förderpumpe
- 20: Absperrventil
- 21: Absperrventil
- 23: Absperrventil
- 24: Wechselbehälter
- 30: Expansionsbehälter, Zusatzbehälter
- 31: Absperrventil
- 32: Absperrventil
- 33: Absperrventil
- 34: Absperrventil
- 40: Dünnschichtverdampfer
- 41: Absperrventil
- 42: Drucksperre
- 43: Absperrventil
- 44: Absperrventil
- 45: Absperrventil
- 46: Absperrventil
- 47: Absperrventil
- 48: Absperrventil
- 50: Förderpumpe
- 51: Steuerventil
- 52: Sammelbehälter
- 53: Absperrventil
- 60: Dünnschichtverdampfer
- 61: Absperrventil
- 62: Absperrventil
- 63: Absperrventil
- 64: Absperrventil
- 65: Wärmetauscher

## Patentansprüche

1. Vorrichtung zum Aufheizen und Trocknen von Teilen (2) mit hygroskopischen Elektroisolierungen auf Zellstoff- oder Kunststoffbasis unter Vakuum durch die Kondensationswärme des Dampfes einer Heizflüssigkeit, wobei während der Aufheizung aus den Teilen (2) mindestens eine höher siedende zweite Flüssigkeit anfällt, mit einem Vakuum-Trocknungskessel (1) zur Aufnahme der Teile (2), einer an den Vakuum-Trocknungskessel (1) angeschlossenen Vakuumpumpe (10), mit mindestens einem vorgeschalteten Kondensator (3, 8) und einem mit dem Vakuum-Trocknungskessel (1) verbundenen ersten Wärmetauscher (16) zum Aufheizen der Heizflüssigkeit, **dadurch gekennzeichnet, dass** an den Vakuum-Trocknungskessel (1) eine erste Förderpumpe (14) zum Verdichten der Heizflüssigkeit angeschlossen ist, und die Heizflüssigkeit anschließend zum ersten Wärmetauscher (16) gelangt, der über Entspannungsventile (18) mit dem Vakuum-Trocknungskessel verbunden ist, so dass der erste Wärmetauscher (16) die Heizflüssigkeit in der flüssigen Phase belassend erhitzt und die Verdampfung erst am oder im Vakuum-Trocknungskessel über die Entspannungsventile (18) erfolgt, wobei die Aufheizung der Teile (2) im wesentlichen ausschließlich mittels Expansionsverdampfung erfolgt.

2. Vorrichtung zum Aufheizen und Trocknen von Teilen (2) mit hygroskopischen Elektroisolierungen auf Zellstoff- oder Kunststoffbasis unter Vakuum durch die Kondensationswärme des Dampfes einer Heizflüssigkeit, wobei während der Aufheizung aus den Teilen (2) mindestens eine höher siedende zweite Flüssigkeit anfällt, mit einem Vakuum-Trocknungskessel (1) zur Aufnahme der Teile (2), einer an den Vakuum-Trocknungskessel (1) angeschlossenen Vakuumpumpe (10), mit mindestens einem vorgeschalteten Kondensator (3, 8) und einem mit dem Vakuum-Trocknungskessel (1) verbundenen ersten Wärmetauscher (16) zum Aufheizen der Heizflüssigkeit, **dadurch gekennzeichnet, dass** an den Vakuum-Trocknungskessel (1) eine erste Förderpumpe (14) zum Verdichten der Heizflüssigkeit angeschlossen ist, und die Heizflüssigkeit anschließend zum ersten Wärmetauscher (16) gelangt, der über Entspannungsventile (18) und über einen Expansionsbehälter (30) mit dem Vakuum-Trocknungskessel verbunden ist, so dass der erste Wärmetauscher (16) die Heizflüssigkeit in der flüssigen Phase belassend erhitzt und die Verdampfung erst über die Entspannungsventile (18) in dem direkt am Vakuum-Trocknungskessel (1) angeordneten Expansionsbehälter (30) erfolgt, wobei die Aufheizung der Teile (2) im wesentlichen ausschließlich mittels Expansionsverdampfung erfolgt.

3. Vorrichtung nach Anspruch 1 oder 2, **dadurch gekennzeichnet, dass** sie mobil ausgebildet ist und als Vakuum-Trocknungsbehälter (1) der Kessel eines aufzuheizenden Transformators verwendet wird.

4. Vorrichtung nach einem der vorhergehenden Ansprüche, **dadurch gekennzeichnet, dass** die Verbindungen zwischen Wärmetauscher (16) und den Entspannungsventilen (18), zwischen einem Ablaufventil (12) am Vakuum-Trocknungskessel (1) und der nachgeschalteten ersten Förderpumpe (14) und zwischen dem Vakuum-Trocknungskessel (1) und einem oder mehreren Absperrventilen (4, 7) trennbar sind.

5. Vorrichtung nach einem der vorhergehenden Ansprüche, **gekennzeichnet durch** einen abnehmbaren Wechselbehälter (24) für die Heizflüssigkeit.

6. Vorrichtung nach einem der vorhergehenden Ansprüche, **gekennzeichnet durch** transportable Isoliermittel, wie Isolierplatten, Isoliermatten, Wandelemente, ein- oder doppelwandige Tragluftzelte, oder **durch** transportable Zusatzheizungen.

7. Vorrichtung nach einem der vorhergehenden Ansprüche 2-6, **dadurch gekennzeichnet, dass** der Expansionsbehälter (30) mit einer kurzen Leitung mit Ventil (31) für die verdampfte Heizflüssigkeit mit dem Vakuum-Trocknungskessel (1) verbunden ist und eine mit einem Ventil (32) versehene Rückleitung für die unverdampfte Heizflüssigkeit aufweist.

8. Vorrichtung nach einem der Ansprüche 2 bis 6, **dadurch gekennzeichnet, dass** der Expansionsbehälter (30) auf dem Vakuum-Trocknungskessel (1) angeordnet ist, mit einer ein Ventil (31) aufweisenden kurzen Leitung zum Vakuum-Trocknungskessel (1) für die verdampfte Heizflüssigkeit, mit einer oder zwei Rückleitungen mit Ventilen (32, 33) für die unverdampfte Heizflüssigkeit und mit einer Zuleitung mit Ventil (34) zum Kondensator (3).

9. Vorrichtung nach einem der Ansprüche 7 oder 8, **dadurch gekennzeichnet, dass** der Expansionsbehälter (30) einen durchströmbaren Doppelmantel aufweist.

10. Vorrichtung nach einem der vorhergehenden Ansprüche 2 bis 3, **dadurch gekennzeichnet, dass** der aus dem Expansionsbehälter (30) abfließende bereits aufkonzentrierte Anteil der Heizflüssigkeit durch ein Ventil (41) und eine Drucksperre (42) mittels Schwerkraft einem nachgeschalteten Dünnschichtverdampfer (40) zur Restabscheidung der Heizflüssigkeit zugeführt und der bei abgesenktem Druck entstehende Dampf durch ein Ventil (45) direkt dem Kondensator (3) zugeführt wird.

11. Vorrichtung nach Anspruch 10, **dadurch gekennzeichnet, dass** die Drucksperre (42) durch eine Förderpumpe (73) mit einer Ventilschaltung gebildet ist und der nachgeschaltete Dünnschichtverdampfer (40) innerhalb der mobilen Anlage aufgestellt ist.

12. Vorrichtung nach einem der vorhergehenden Ansprüche, **dadurch gekennzeichnet, dass** zum Abziehen der Heizflüssigkeit aus dem Vakuum-Trocknungskessel (1) eine bevorzugt als Flüssigkeitsringpumpe oder als Verdrängerpumpe ausgeführte zweite Förderpumpe (50) vorgesehen ist, sowie ein Zwischenbehälter (52) für die aus dem Vakuum-Trocknungskessel (1) abfließende Heizflüssigkeit, wobei die nachgeschaltete erste Förderpumpe (14) für die Weiterförderung der Heizflüssigkeit in den Wärmetauscher (16) als Kreiselpumpe ausgeführt ist.

13. Verfahren zum Aufheizen und Trocknen vom Teilen (2) mit hygroskopischen Elektroisolierungen auf Zellstoff- oder Kunststoffbasis unter Vakuum durch die Kondensationswärme des Dampfes einer Heizflüssigkeit, wobei während der Aufheizung aus den Teilen (2) mindestens eine höher siedende zweite Flüssigkeit anfällt, **dadurch gekennzeichnet, dass** die Heizflüssigkeit nur soweit aufgeheizt wird, dass sie noch flüssig bleibt, um sie durch eine Druckabsenkung mittels eines Entspannungsventils (18) oder eines am Vakuum-Trocknungskessel (1) angeordneten Expansionsbehälters (30) direkt in den Vakuum-Trocknungskessel (1) zu verdampfen.

## Claims

1. Device for heating and drying parts (2) with hygroscopic electrical insulations on a cellular material or plastics material basis under vacuum by the condensation heat of the steam of a heating liquid, wherein during the heating at least one second liquid with a high boilding point precipitates from the parts (2), with a vacuum drying vessel (1) for reception of the parts (2), a vacuum pump (10), which is connected with the vacuum drying vessel (1), with at least one upstream condenser (3, 8) and a first heat exchanger (16), which is connected with the vacuum drying vessel (1), for heating the heating liquid, **characterised in that** a first conveying pump (14) for compressing the heating liquid is connected with the vacuum drying vessel (1) and the heating liquid subsequently passes to the first heat exchanger (16), which is connected by way of expansion valves (18) with the vacuum drying vessel so that the first heat exchanger (16) heats the heating liquid while leaving it in the liquid phase and the evaporation takes place at or in the vacuum drying vessel by way of the relief valves (18), wherein the heating of the parts (2) is substantially solely effected by expansion evaporation.

2. Device for heating and drying parts (2) with hygroscopic electrical insulations on a cellular material or plastics material basis under vacuum by the condensation heat of the steam of a heating liquid, wherein during the heating at least one second liquid with a high boilding point precipitates from the parts (2), with a vacuum drying vessel (1) for reception of the parts (2), a vacuum pump (10), which is connected with the vacuum drying vessel (1), with at least one upstream condenser (3, 8) and a first heat exchanger (16), which is connected with the vacuum drying vessel (1), for heating the heating liquid, **characterised in that** a first conveying pump (14) for compressing the heating liquid is connected with the vacuum drying vessel (1) and the heating liquid subsequently passes to the first heat exchanger (16), which is connected by way of expansion valves (18) and by way of an expansion container (30) with the vacuum drying vessel so that the first heat exchanger (16) heats the heating liquid while leaving it in the liquid phase and the evaporation takes place by way of the expansion valves (18) in the expansion container (30) arranged directly at the vacuum drying vessel (1), wherein the heating of the parts (2) is substantially solely effected by expansion evaporation.

3. Device according to claim 1 or 2, **characterised in that** it is of mobile construction and is used as a vacuum drying container (1) of the vessel of a transformer to be heated.

4. Device according to any one of the preceding claims, **characterised in that** the connections between heat exchanger (16) and the expansion valves (18), between a discharge valve (12) at the vacuum drying vessel (1) and the downstream first conveying pump (14) and between the vacuum drying vessel (1) and one or more blocking valves (4, 7) are separable.

5. Device according to any one of the preceding claims, **characterised by** a removable exchange container (24) for the heating liquid.

6. Device according to any one of the preceding claims, **characterised by** transportable insulating means, such as insulating plates, insulating mats, wall elements, single-walled or double-walled air-supported canopies, or by transportable supplementary heating means.

7. Device according to any one of the preceding claims, 2 to 6 **characterised in that** the expansion container (30) is connected with the vacuum drying vessel (1) by a short line with a valve (31) for the evaporated heating liquid and has a return line, which is provided with a valve (32), for the unevaporated heating liquid.

8. Device according to any one of claims 2 to 6, **characterised in that** the expansion container (30) is arranged on the vacuum drying vessel (1), with a short line, which has a valve (31), to the vacuum drying vessel (1) for the evaporated heating liquid, with one or two return lines with valves (32, 33) for the unevaporated heating liquid and with a feed line with a valve (34) to the condenser (3).

9. Device according to one of claims 7 or 8, **characterised in that** the expansion container (30) has a double casing able to be flowed through.

10. Device according to any one of the preceding claims 2 to 9, **characterised in that** the already concentrated proportion, which flows out of the expansion container (30), of the heating liquid is fed by a valve (41) and a pressure lock (42) by way of gravitational force to a downstream thin-film evaporator (40) for residual precipitation of the heating liquid and the steam arising at reduced pressure is fed by a valve (45) directly to the condenser (3).

11. Device according to claim 10, **characterised in that** the pressure lock (42) is formed by a conveying pump (73) with a valve circuit and the downstream thin-film evaporator (40) is set up within the mobile plant.

12. Device according to any one of the preceding claims, **characterised in that** for extraction of the heating liquid from the vacuum drying vessel (1) a second conveying pump (50), which is preferably constructed as a liquid ring pump or as a positive-displacement pump, and an intermediate container (52) for the heating liquid flowing out of the vacuum drying vessel (1) are provided, wherein the downstream first conveying pump (14) is constructed as a centrifugal pump for further conveying of the heating liquid in the heat exchanger (16).

13. Method of heating and drying parts (2) with hygroscopic electrical insulations on a cellular material or plastics material basis under vacuum by the condensation heat of the steam of a heating liquid, wherein during the heating at least one second liquid with a high boiling point precipitates from the parts (2), **characterised in that** the heating liquid is heated up only to such an extent that it still remains liquid so as to directly evaporate in the vacuum drying vessel (1) by a pressure reduction by way of an expansion valve (18) or of an expansion container (30), which is arranged at the vacuum drying vessel (1).

## Revendications

1. Dispositif pour chauffer et sécher, sous vide par la chaleur de condensation de la vapeur d'un liquide de chauffage, des pièces (2) avec des isolations électriques hygroscopiques à base de matière cellulaire ou synthétique, au moins un deuxième liquide à haut point d'ébullition se formant pendant le chauffage à partir des pièces (2), avec une chaudière de séchage sous vide (1) pour recevoir les pièces (2), une pompe à vide (10) raccordée à la chaudière de séchage sous vide (1) avec au moins un condenseur (3, 8) monté en amont et un premier échangeur de chaleur (16) connecté à la chaudière de séchage sous vide (1), pour le chauffage du liquide de chauffage, **caractérisé en ce qu'**une première pompe de refoulement (14) pour la compression du liquide de chauffage est raccordée à la chaudière de séchage sous vide (1), et le liquide de chauffage arrive ensuite jusqu'au premier échangeur de chaleur (16), qui est connecté par le biais de vannes de détente (18) à la chaudière de séchage sous vide, de sorte que le premier échangeur de chaleur (16) chauffe le liquide de chauffage restant dans la phase liquide et que l'évaporation se produise seulement au niveau de ou dans la chaudière de séchage sous vide par le biais des vannes de détente (18) au moins le chauffer les pièces (2) se produise essentiellement seulement par l'évaporation d'expansion.

2. Dispositif pour chauffer et sécher, sous vide par la chaleur de condensation de la vapeur d'un liquide de chauffage, des pièces (2) avec des isolations électriques hygroscopiques à base de matière cellulaire ou synthétique, au moins un deuxième liquide à haut point d'ébullition se formant pendant le chauffage à partir des pièces (2), avec une chaudière de séchage sous vide (1) pour recevoir les pièces (2), une pompe à vide (10) raccordée à la chaudière de séchage sous vide (1) avec au moins un condenseur (3, 8) monté en amont et un premier échangeur de chaleur (16) connecté à la chaudière de séchage sous vide (1), pour le chauffage du liquide de chauffage, **caractérisé en ce qu'**une première pompe de refoulement (14) pour la compression du liquide de chauffage est raccordée à la chaudière de séchage sous vide (1), et le liquide de chauffage arrive ensuite jusqu'au premier échangeur de chaleur (16), qui est connecté par le biais de vannes de détente (18) et par le biais d'un réservoir d'expansion (30) à la chaudière de séchage sous vide, de sorte que le premier échangeur de chaleur (16) chauffe le liquide de chauffage restant dans la phase liquide et que l'évaporation se produise seulement par le biais des vannes de détente (18) dans le réservoir d'expansion (30) disposé directement au niveau de la chaudière de séchage sous vide (1), au moins le chauffer les pièces (2) se produise essentiellement seulement par l'évaporation d'expansion.

3. Dispositif selon la revendication 1 ou 2, **caractérisé en ce qu'**il est réalisé sous forme mobile et est utilisé comme réservoir de séchage sous vide (1) de la chaudière d'un transformateur à chauffer.

4. Dispositif selon l'une quelconque des revendications précédentes, **caractérisé en ce que** les connexions entre l'échangeur de chaleur (16) et les soupapes de détente (18), entre une soupape d'écoulement (12) au niveau de la chaudière de séchage sous vide (1) et la première pompe de refoulement (14) montée en aval et entre la chaudière de séchage sous vide (1) et une ou plusieurs vannes de blocage (4, 7), sont séparables.

5. Dispositif selon l'une quelconque des revendications précédentes, **caractérisé par** un récipient d'échange amovible (24) pour le liquide de chauffage.

6. Dispositif selon l'une quelconque des revendications précédentes, **caractérisé par** un moyen d'isolation transportable comme des plaques isolantes, des tapis isolants, des éléments de paroi, des tentes de protection à air porteur à une ou deux parois ou par des chauffages auxiliaires transportables.

7. Dispositif selon l'une quelconque des revendications précédentes 2 à 6, **caractérisé en ce que** le réservoir d'expansion (30) est connecté par une courte conduite avec la vanne (31) pour le liquide de chauffage évaporé à la chaudière de séchage sous vide (1) et présente une conduite de retour pourvue d'une vanne (32) pour le liquide de chauffage non évaporé.

8. Dispositif selon l'une quelconque des revendications 2 à 6, **caractérisé en ce que** le réservoir d'expansion (30) est disposé sur la chaudière de séchage sous vide (1), avec une courte conduite présentant une vanne (31) allant jusqu'à la chaudière de séchage sous vide (1) pour le liquide de chauffage évaporé, avec une ou deux conduites de retour avec des vannes (32, 33) pour le liquide de chauffage non évaporé et avec une conduite d'amenée avec une vanne (34) allant au condenseur (3).

9. Dispositif selon l'une quelconque des revendications 7 ou 8, **caractérisé en ce que** le réservoir d'expansion (30) présente une double enveloppe pouvant être parcourue par l'écoulement.

10. Dispositif selon l'une quelconque des revendications précédentes 2 à 9, **caractérisé en ce que** la proportion du liquide de chauffage déjà concentrée et s'échappant hors du réservoir d'expansion (30) est acheminée par une vanne (41) et une barrière de pression (42) au moyen de la force centrifuge à un évaporateur à couche mince (40) monté en aval pour la séparation résiduelle du liquide de chauffage et la vapeur produite lors de la diminution de la pression est acheminée par une vanne (45) directement au condenseur (3).

11. Dispositif selon la revendication 10, **caractérisé en ce que** la barrière de pression (42) est formée par une pompe de refoulement (73) avec un montage de vanne et l'évaporateur à couche mince (40) monté en aval est installé à l'intérieur de l'installation mobile.

12. Dispositif selon l'une quelconque des revendications précédentes, **caractérisé en ce que** pour extraire le liquide de chauffage de la chaudière de séchage sous vide (1) on prévoit une deuxième pompe de refoulement (50) réalisée de préférence sous forme de pompe annulaire de liquide ou sous forme de pompe à déplacement, ainsi qu'un réservoir intermédiaire (52) pour le liquide de chauffage s'écoulant hors de la chaudière de séchage sous vide (1), la première pompe de refoulement (14) montée en aval pour le transport ultérieur du liquide de chauffage dans l'échangeur de chaleur (16) étant réalisée sous forme de pompe centrifuge.

13. Procédé pour chauffer et sécher, sous vide par la chaleur de condensation de la vapeur d'un liquide de chauffage, des pièces (2) avec des isolations électriques hygroscopiques à base de matière cellulaire ou synthétique,
au moins un deuxième liquide à haut point d'ébullition se formant pendant le chauffage à partir des pièces (2), **caractérisé en ce que** le liquide de chauffage n'est chauffé que dans la mesure où il reste encore liquide, afin de l'évaporer directement dans la chaudière de séchage sous vide (1) par une diminution de la pression au moyen d'une vanne de détente (18) ou d'un réservoir d'expansion (30) disposé au niveau de la chaudière de séchage sous vide (1).
